# EUROPÄISCHE PATENTSCHRIFT

(11) **EP 3 733 474 B1**
(45) Veröffentlichungstag und Bekanntmachung des Hinweises auf die Patenterteilung: **14.06.2023**
(21) Anmeldenummer: 20168247.3
(22) Anmeldetag: 06.04.2020
(51) Int. Cl.: B60W 40/10, B60W 40/068, B60W 40/114, B60W 40/072

(54) **KURVENRICHTUNGSERMITTLUNG FÜR EIN FAHRZEUG**
DETERMINATION OF CURVE DIRECTION FOR A VEHICLE
DÉTERMINATION DE LA DIRECTION DE LA COURBE POUR UN VÉHICULE

(30) Priorität: 25.04.2019 DE 102019205922
(43) Veröffentlichungstag der Anmeldung: 04.11.2020
(73) Patentinhaber: Volkswagen Aktiengesellschaft, 38440 Wolfsburg (DE)
(72) Erfinder: Laumanns, Nando, 38442 Wolfsburg (DE)

(56) Entgegenhaltungen:
- WO-A1-99/32338
- DE-A1- 10 023 521
- DE-A1-102014 103 843
- DE-A1-102014 206 475
- US-A1- 2008 015 764

## Beschreibung

Die Erfindung betrifft ein Verfahren und eine Vorrichtung zur Kurvenrichtungsermittlung für ein Fahrzeug. Bei dem Fahrzeug kann es sich um ein Kraftfahrzeug handeln und insbesondere um einen Personenkraftwagen oder einen Lastkraftwagen.

Die Kenntnis über die Richtung einer Kurve, die ein Fahrzeug aktuell durchfährt, ist für verschiedenste Fahrerassistenzsysteme und insbesondere Fahrdynamikregelsysteme, wie beispielsweise ein elektronisches Stabilitätsprogramm (ESP), relevant. Genauer gesagt ist es relevant, ob aktuell eine Rechts- oder Linkskurve durchfahren wird, beispielsweise um an einer Kurveninnenseite liegende Räder zwecks Stabilisierung fahrerautonom abzubremsen. Auch können in der Abhängigkeit der Kurvenrichtung fahrerautonome Lenkeingriffe durchgeführt werden.

Derzeit wird die Kurvenrichtung anhand von einem Lenkwinkel ermittelt, wie er z.B. aus einem Lenkgetriebe, mit einem Lenkradwinkelsensor oder allgemein von einem Lenk-Servosystem erhalten werden kann. Ebenso ist es bekannt, einen Querbeschleunigungswert heranzuziehen, der beispielsweise aus Querbeschleunigungssensoren erhalten werden kann, wie sie bei ESP-Systemen eingesetzt werden. Alternativ kann ein Querbeschleunigungswert auch rechnerisch ermittelt werden, z.B. aus einem aktuellen Lenkwinkel und einer Fahrzeuggeschwindigkeit.

Bei der vorliegenden Erfindung werden die vorstehend diskutierten Winkel ermittelt und berücksichtigt.

Eine Kurvenrichtung lässt sich mit den bekannten Ansätzen nach Erkenntnissen der Erfindung jedoch nicht immer ausreichend zuverlässig feststellen. So wurde erkannt, dass in bestimmten Situationen zwar ein Lenkwinkel über ein Lenkradgetriebe vorgegeben werden kann, das Fahrzeug aber dennoch eine andere Kurvenrichtung abfahren bzw. durchlaufen kann, beispielsweise wenn es auf einem glatten Fahrbahnuntergrund ins Schleudern gerät. Auch die Querbeschleunigung kann insbesondere in kritischen Fahrsituationen nicht immer eine ausreichend zuverlässige Kurvenrichtungsermittlung gewährleisten.

Die US 9,260,096 B2 offenbart eine Lenkmanöverermittlung, um festzustellen, ob ein abruptes Lenkmanöver durchgeführt wird. Lenkmanöver werden aber insbesondere in kritischen Fahrsituationen nicht immer in eine entsprechende Kurvenrichtung umgesetzt. Analoges gilt für die CA 2 396 349 C, bei der ein Lenkwinkel und ein Fahrzeugradwinkel betrachtet werden. Auch hieraus lässt sich z.B. bei schnellen Richtungswechseln oder dem Gleiten auf einer glatten Fahrbahn nicht immer eine tatsächlich durchfahrene Kurvenrichtung ermitteln.

Aus der DE 10 2014 206 475 A1 ist ferner eine Lenkwinkelbestimmung für ein Fahrzeug bekannt, wobei ein Fahrzeugmodell einen theoretischen Lenkwinkel ermittelt, sofern geeignete Fahrbedingungen erkannt werden. Die DE 100 23 521 A1 offenbart ferner eine Lösung zur Erkennung eines freidrehenden Rades in einem Kraftfahrzeug anhand von Umlaufgeschwindigkeiten der Räder und dem Überprüfen einer Kurvenfahrt samt Kurvenrichtung. Die DE 10 2010 025 364 A1 offenbart ferner eine Fahrzeugbewegungs-Steuerungseinrichtung, bei der Bremskräfte an ausgewählten Rädern zum Verhindern eines Seitenüberschlags erhöht werden können.

Es besteht somit ein Bedarf dafür, die Kurvenrichtungsermittlung bei Fahrzeugen zu verbessern und insbesondere die Zuverlässigkeit dieser Ermittlung zu erhöhen.

Diese Aufgabe wird durch ein Verfahren mit den Merkmalen des beigefügten Anspruchs 1 und eine Vorrichtung mit den Merkmalen des beigefügen Anspruchs 9 gelöst. Vorteilhafte Weiterbildungen sind in den abhängigen Ansprüchen angegeben.

Allgemein sieht die Erfindung vor, eine Mehrzahl von Werten für die Kurvenrichtungsermittlung heranzuziehen, also nicht lediglich den Lenkwinkel oder die Querbeschleunigung. Stattdessen soll die Kurvenrichtung anhand mehrerer Werte ermittelt werden, die eine Kurvenrichtung anzeigen bzw. in Abhängigkeit hiervon variieren. Dies betrifft den Querbeschleunigungswert sowie wenigstens einen von einem Gierratenwert und Lenkwinkelwert. Weiter wird auch ein Reibwert mit berücksichtigt. Dies ermöglicht, dass Einflüsse des Fahrbahnuntergrunds (oder, mit anderen Worten, Fahrzeuguntergrunds) mit berücksichtigt werden, erfindungsgemäß in der Weise, dass der Einfluss der ermittelten Werte auf das Ermittlungsergebnis in Abhängigkeit hiervon festgelegt wird. Um das Risiko von Fehlermittlungen zu reduzieren, kann auch vorgesehen sein, Wertebereiche festzulegen, in dem ein ermittelter Wert (insbesondere ein Querbeschleunigungswert oder Gierratenwert und/oder Lenkwinkelwert) keinen Einfluss besitzt bzw. nicht berücksichtigt wird.

Im Detail wird ein Verfahren zur Kurvenrichtungsermittlung gemäß Anspruch 1 vorgeschlagen.

Der Querbeschleunigungswert kann in herkömmlicher Weise eine Beschleunigung quer zu einer Fahrtrichtung und insbesondere einer Geradeaus-Fahrtrichtung des Fahrzeugs (also quer zur Fahrzeuglängsachse) beschreiben. Es kann sich hierbei um eine Zentrifugalbeschleunigung handeln. Ermittelt werden kann der Querbeschleunigungswert mittels einer der vorstehend genannten Varianten, also beispielsweise mittels eines ESP-Systems bzw. mittels Querbeschleunigungssensoren.

Der Gierratenwert kann eine Beschleunigung um eine vertikale Fahrzeugachse (Höhenachse) angeben, wobei sich die vertikale Fahrzeugachse parallel zu einer Achse der Gravitationskraft erstrecken kann (zumindest während einer Geradeausfahrt oder eines Fahrzeugstillstands). Ermittelt werden kann der Gierratenwert über hierfür vorgesehene Sensoren, wie sie beispielsweise in der o.g. US 9,260,096 B2 ebenfalls verwendet werden. Derartige Sensoren kommen z.B. bei Antischlupfregelsystemen (ASR) zum Einsatz.

Der Reibwert kann in an sich bekannter Weise rechnergestützt bzw. modellbasiert ermittelt werden. Hierfür ist es z.B. bekannt, ermittelte Beschleunigungswerte und insbesondere gemessene Querbeschleunigungen zu verwenden und beispielsweise eine Differenz hiervon zu betrachten. Es wird verwiesen auf die DE 10 2016 225 352 B4 der Anmelderin, in der eine solche Ermittlung gelehrt wird.

Das Ermitteln der Kurvenrichtung basierend auf den ermittelten Werten kann umfassen, dass die ermittelten Werte zum Ermitteln der Kurvenrichtung berücksichtigt werden. Wie nachstehend noch ausgeführt, können zumindest die Querbeschleunigungswerte und der wenigstens eine von dem Gierratenwert und/oder Lenkwinkelwert dabei miteinander verglichen werden und kann insbesondere eine Konsistenzprüfung hiervon durchgeführt werden. Der Reibwert wird erfindungsgemäß dazu verwendet, um bei der Ermittlung der Kurvenrichtung den Gierratenwert und den Querbeschleunigungswert bei abnehmendem Reibwert stärker zu gewichten, und kann zusätzlich dazu verwendet werden einen der anderen ermittelten Werte und insbesondere den Gierratenwert und/oder Querbeschleunigungswert anzupassen und insbesondere zu normieren (beispielsweise durch Bilden eines Quotienten bzw. Verhältnisses aus dem entsprechenden Wert geteilt durch den Reibwert).

Ein Vorteil der geschilderten Lösung ist zunächst, dass die Zuverlässigkeit bei der Kurvenrichtungsermittlung erhöht wird, da mehrere verschiedene Größen berücksichtigt werden, und nicht lediglich aus einem einzelnen Wert (z.B. dem Lenkwinkel) auf die Kurvenrichtung geschlossen wird. Letzteres kann insbesondere in kritischen Fahrsituationen nicht der Realität entsprechen.

Ein weiterer Vorteil ergibt sich aus der Berücksichtigung des Reibwertes. Dieser ermöglicht, dass insbesondere ein Querbeschleunigungswert und Gierratenwert selbst bei Vorsehen nachstehend geschilderter optionaler Totzonenbereiche noch ausreichend stark (z.B. stärker gewichtet) berücksichtigt werden können. Das Einbeziehen derartiger Beschleunigungswerte bei beringen Reibwerten war bisher oftmals nicht zuverlässig möglich. Mit anderen Worten wird durch Berücksichtigung des Reibwertes die Genauigkeit bei der Kurvenrichtungsermittlung erhöht, da die bei einer geringen Reibung erwartungsgemäß niedrigeren Beschleunigungswerte (z.B. wegen einer vorsichtigen Fahrweise) dennoch zur Kurvenrichtungsermittlung heranziehbar sind, da sie erfindungsgemäß in Abhängigkeit des abnehmenden Reibwerts stärker gewichtet werden.

Eine weitere Erkenntnis der Erfindung liegt darin, dass der Querbeschleunigungswert der zuverlässigste Indikator für eine tatsächlich vorliegende Kurvenrichtung ist. Ein Lenkwinkel kann hingegen nicht immer (z.B. bei glatter Fahrbahn oder einem allgemeinen Schleudern) in eine entsprechende Kurvenrichtung umgesetzt werden. Ebenso kann ein Gierratenwert in bestimmten Fahrsituationen nicht die tatsächliche Kurvenrichtung angeben, beispielsweise während sogenannter Driftfahrten oder allgemein, wenn das Fahrzeug nahe der Hinterachse an ein Hindernis stößt und sich um seine vertikale bzw. Hochachse dreht, dennoch aber eine Kurvenfahrt fortsetzt. Entsprechend soll erfindungsgemäß der Querbeschleunigungswert stets berücksichtigt werden.

Gemäß einer Weiterbildung kann vorgesehen sein, für wenigstens einen der ermittelten Werte mit Ausnahme des Reibwerts (also für wenigstens einen von Querbeschleunigungswert, Gierratenwert und Lenkwinkelwert) wenigstens einen Wertebereich vorzusehen, in dem der ermittelte Wert nicht zur ermittelten Kurvenrichtung beiträgt. Dieser Wertebereich kann daraus resultieren, dass Werte aus diesem Wertebereich in einer Totzone liegen und/oder einem Totzonenbereich entsprechen. Eine solche Totzone kann durch einen Totzonenglied bzw. eine Totzonenfunktion bereitgestellt werden. Der Wertebereich kann einen Eingangswertebereich eines solchen Totzonenglieds oder eines dem Totzonenglied vorgelagerten Umrechnungsglieds, wie z.B. einem Normierungsglied, darstellen. Werte innerhalb dieses Wertebereichs können in der Totzone des Totzonenglieds liegen, insbesondere nach Normierung bzw. Umrechnung mit einem entsprechenden Glied.

Allgemein kann das Nichtbeitragen zur ermittelten Kurvenrichtung daraus resultieren, dass Werte in dem ermittelten Wertebereich nicht weiter berücksichtigt werden, zu null gesetzt werden und/oder allgemein von einer Berücksichtigung bei der Kurvenrichtungsermittlung ausgeschlossen sind.

Der Wertebereich kann allgemein derart gewählt sein, dass er einen Bereich umfasst oder abbildet, der einem Übergang von einer ersten zu einer zweiten Kurvenrichtung entspricht. Mit anderen Worten kann der Wertebereich also einen Übergangs-Wertebereich betreffen, in dem die Werte von z.B. der Querbeschleunigung, der Gierrate oder des Lenkwinkels sich am Übergang von einer ersten Kurvenrichtung zu einer zweiten Kurvenrichtung befinden. Werden, wie nachstehend erläutert, diese Werte je nach Kurvenrichtung positiv oder negativ bewertet, kann es sich bei dem Übergangs-Wertebereich um einen Bereich nahe zu und umfassend null handeln und bevorzugt auch einige Werte in der Umgebung von null umfassen (beispielsweise - 5 % bis +5 % betragen, wobei sich die Prozentzahlen auf einen jeweils maximal erzielbaren positiven und negativen Wert beziehen). Hierdurch kann vermieden werden, dass im Übergangsbereich, in dem allgemein eine Unsicherheit hinsichtlich der eingenommenen Kurvenrichtung und/oder allgemein ein erhöhtes Signalrauschen vorliegen kann, die entsprechenden Werte nicht fälschlicherweise als eindeutige Indikatoren für eine entsprechende Kurvenrichtung bewertet werden. Hierdurch wird die Zuverlässigkeit bei der Kurvenrichtungsermittlung erhöht.

In diesem Zusammenhang kann ferner vorgesehen sein, dass die Größe des Wertebereichs abhängig vom Reibwert ist. Der Reibwert kann demnach einen Einfluss darauf haben, in welchem Ausmaß die ermittelten Werte insbesondere in dem vorstehend genannten Übergangs-Wertebereich tatsächlich berücksichtigt werden.

In diesem Zusammenhang kann beispielsweise vorgesehen sein, dass die Abhängigkeit (des Wertebereichs vom Reibwert) durch Normieren des entsprechenden ermittelten Werts mittels des Reibwerts bereitgestellt wird. Beispielsweise kann der entsprechende Wert durch den Reibwert geteilt werden (z.B. mittels eines Normierungsglieds). Es kann auch von einem Skalieren des ermittelten Werts mittels des Reibwerts gesprochen werden.

Diese Variante ist insbesondere dann relevant, wenn der entsprechend normierte Wert, wie gemäß einer weiteren Ausführungsform ebenfalls möglich, dann einem Totzonenglied bzw. einer Totzonenfunktion zugeführt wird. Ein Totzonen(werte)bereich dieses Glieds bzw. dieser Funktion kann konstant sein und/oder nicht abhängig vom Reibwert veränderbar sein. Stattdessen kann allein die Reibwertnormierung darüber entscheiden, ob ein aktuell ermittelter Wert in dem Totzonenbereich liegt oder nicht.

Aufgrund der Reibwertnormierung werden bei einer zunehmenden Glätte (d.h. abnehmenden Reibwerten) die ermittelten Werte mit einer erhöhten Wahrscheinlichkeit nicht im Totzonenbereich liegen, wohingegen bei zunehmenden Reibwerten die Wahrscheinlichkeit zum Erreichen der Totzone steigt. Dem liegt der Gedanke zugrunde, dass die ermittelten Werte bei einer erhöhten Glätte voraussichtlich geringer ausfallen, beispielsweise da der Fahrer dann eine geringere Fahrzeuggeschwindigkeit vorgeben wird und somit die Querbeschleunigungswerte und Gierratenwerte voraussichtlich geringer ausfallen werden. Durch Berücksichtigung des Reibwerts wird also gewährleistet, dass auch bei entsprechend geringen Nutzsignalen eine zuverlässige Kurvenrichtungsermittlung möglich ist, wobei bevorzugt auch weiterhin ein (Totzonen-)Wertebereich beibehalten werden kann, in dem die ermittelten Werte nicht zwecks Kurvenrichtungsermittlung berücksichtigt werden, um Fehldetektionen im Übergangsbereich zwischen einer Links- und Rechtskurve zu vermeiden.

Zusätzlich oder alternativ kann vorgesehen sein, dass die Abhängigkeit (der Wertebereichsgröße vom Reibwert) durch Definieren eines Totzonenbereichs (und insbesondere einer Größe hiervon) für den ermittelten Wert in Abhängigkeit des Reibwerts bereitgestellt wird. Der Totzonenbereich kann von dem vorstehend erwähnten Totzonenglied bzw. der Totzonenfunktion umfasst sein. Er kann einen Wertebereich definieren, in dem ein Eingangswert als Ausgangswert null oder einem anderen festgelegten Wert ausgegeben wird (bzw. in diesen Ausgangswert transformiert wird), wobei der entsprechende Ausgangswert dann nicht mehr zur Kurvenrichtungsermittlung beitragen kann. Auch hier gilt, dass der Totzonenbereich bei abnehmenden Reibwerten bevorzugt geringer wird und bei zunehmenden Werten größer wird.

Beide der vorstehend erwähnten Abhängigkeiten können also dazu führen, dass bei zunehmender Glätte (d.h. abnehmenden Reibwert) der Wertebereich, in dem ermittelte Werte unberücksichtigt bleiben, geringer ausfällt. Ebenso kann vorgesehen sein, dass sich dieser Wertebereich mit zunehmendem Reibwert wieder vergrößert. Zusammengefasst sieht also eine weitere Ausführungsform vor, dass sich der Wertebereich (in dem der ermittelte Wert nicht zur Kurvenrichtung beiträgt) mit abnehmendem Reibwert verkleinert.

Gemäß einer Weiterbildung sind für wenigstens zwei der ermittelten Werte (insbesondere für den Querbeschleunigungswert und den wenigstens einen weiteren von Gierratenwert und Lenkwinkelwert) aber mit Ausnahme des Reibwerts bei einer ersten Kurvenrichtung positive Werte und bei einer zweiten Kurvenrichtung negative Werte erhaltbar. Die Kurvenrichtung kann dann aus einem Vergleich der Vorzeichen der wenigstens zwei ermittelten Werte ermittelt werden. Wird also eine Linkskurve durchfahren, können Werte mit anderen Vorzeichen erhalten werden, als wenn eine Rechtskurve durchfahren wird. Am Übergangsbereich zwischen Links- und Rechtskurve, der allgemein einer Geradeausfahrt entspricht, können dann Werte von null erhalten werden.

Insbesondere bei dieser Variante kann der vorstehend geschilderte Wertebereich, in dem ermittelte Werte nicht zur ermittelten Kurvenrichtung beitragen und der den Bereich des Vorzeichenwechsels (also die Geradeausfahrt) umfasst, von Interesse sein, da aufgrund eines Signalrauschens oder anderer Störfaktoren nicht jeder Vorzeichenwechsel tatsächlich eine wechselnde Kurvenrichtung anzeigt. Damit die entsprechenden negativen bzw. positiven Werte erhalten werden, können die Sensoren entsprechende positive und negative Ausgangssignale liefern oder Ausgangssignale, die z.B. ein kontinuierliches Wertespektrum angeben, können entsprechend umgerechnet werden. Hierfür kann das Ausgangssignal während einer Geradeausfahrt identifiziert werden und können die weiteren Signalwerte bzw. Signalbereiche dann entsprechend positiv oder negativ skaliert werden.

In diesem Zusammenhang kann ferner vorgesehen sein, dass bei mangelnder Konsistenz der Vorzeichen keine Kurvenrichtung ermittelt wird. Beispielsweise kann dann die Kurvenrichtungsermittlung allgemein als fehlgeschlagen bewertet werden und z.B. nicht für eine Regelung der Fahrdynamik herangezogen werden. Alternativ ist es möglich, ein vormals abgespeichertes Kurvenrichtungs-Ermittlungsergebnis zu verwenden, beispielsweise also eine Kurvenrichtung, die den bezogen auf den aktuellen Zeitpunkt jüngsten Zeitstempel besitzt bzw. in einem vormaligen Ermittlungszyklus ermittelt wurde. Allgemein kann das Verfahren also auch den Schritt des Abspeicherns einer ermittelten Kurvenrichtung (bevorzugt unter Ergänzen eines Zeitstempels) umfassen.

Es ist ferner zu betonen, dass auch bei dieser Variante bevorzugt vorgesehen ist, dass in jedem Fall der Querbeschleunigungswert ermittelt wird und dann mit dem Vorzeichen von wenigstens einem von Gierratenwert und Lenkwinkelwert verglichen wird.

Die Erfindung betrifft ferner eine Vorrichtung gemäß Anspruch 9.

Die Vorrichtung und insbesondere die Ermittlungseinrichtung kann allgemein einen Mikroprozessor umfassen und für eine Verarbeitung digitaler Informationen eingerichtet sein. Die Ermittlungseinrichtung kann eine Softwarekomponente sein, die auf der Vorrichtung und insbesondere deren etwaigen Mikroprozessor ausgeführt wird. Die Vorrichtung und insbesondere die Ermittlungseinrichtung kann die Werte dadurch ermitteln, dass sie mit einem Kommunikationssystem des Fahrzeugs verbunden bzw. verbindbar ist, insbesondere mit einem Kommunikationsbus. Hierüber können in an sich bekannter Weise die entsprechenden Werte von anderen Systemen (beispielsweise einem ESP-System oder einem ASR-System angefordert werden). Zum Ermitteln des Reibwerts kann die Ermittlungseinrichtung, wie vorstehend erwähnt, den Reibwert mittels eines modellbasierten Ansatzes schätzen und/oder von einer anderweitigen Einheit abfragen, die diesen Reibwert ermittelt, z.B. von einem ASR-System. Nach Ermitteln der Kurvenrichtung kann die Vorrichtung allgemein dazu eingerichtet sein, das Ermittlungsergebnis z.B. über den vorstehend genannten Kommunikationsbus an Fahrdynamikregelsysteme zu übermitteln bzw. diesen zur Verfügung zu stellen.

Wie vorstehend erwähnt, wird durch den entsprechenden Wertebereich ermöglicht, dass in einem Übergangsbereich der ermittelten Werte zwischen einer Rechts- und Linkskurve unmittelbare Fehldetektionen z.B. bei jeglichem Vorzeichenwechsel verhindert werden. Die Robustheit des Ermittlungsergebnisses wird folglich erhöht.

Die Erfindung wird im Folgenden anhand der beigefügten schematischen Figuren erläutert. Gleichartige oder gleichwirkende Merkmale können darin mit den gleichen Bezugszeichen versehen sein.
- Fig. 1: zeigt ein Fahrzeug, das eine Vorrichtung gemäß einem Ausführungsbeispiel der Erfindung umfasst;
- Fig. 2: ist eine Darstellung im Sinne eines Ablaufschemas, in dem einzelne Funktionsblöcke zur Umsetzung eines erfindungsgemäßen Verfahrens gezeigt sind, wobei das Verfahren von Fig. 2 mit der Vorrichtung aus Fig. 1 ausführbar ist.

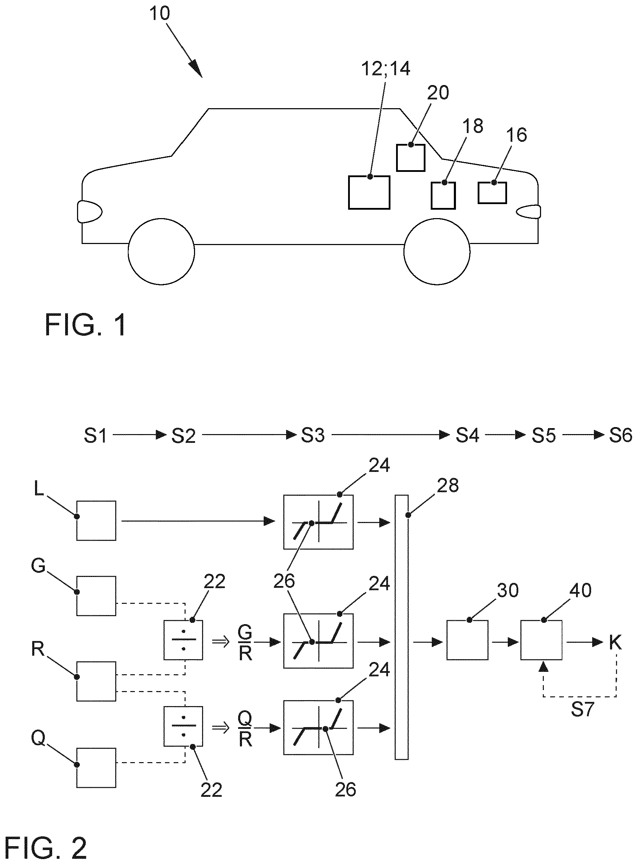

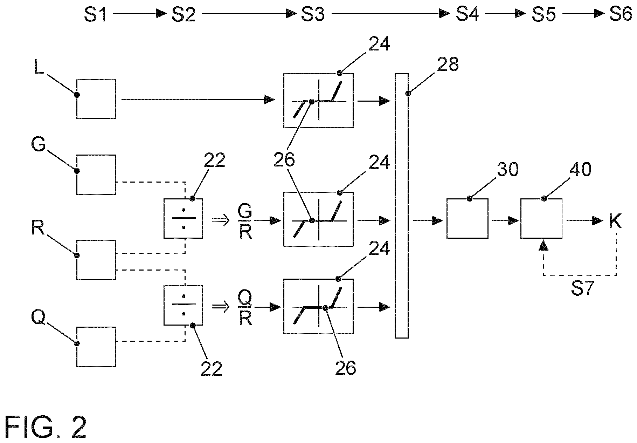

In Fig. 1 ist ein Fahrzeug 10 gezeigt, das eine schematisch angedeutete Vorrichtung gemäß einem Ausführungsbeispiel der Erfindung umfasst, wobei die Vorrichtung das erfindungsgemäße Verfahren aus Fig. 2 ausführt. Die Vorrichtung ist als ein Steuergerät 12 realisiert und umfasst eine nicht näher dargestellte Ermittlungseinrichtung 14, die als eine Softwarekomponente von dem Steuergerät ausgeführt wird. Weiter gezeigt ist ein Querbeschleunigungssensor 16 und ein Gierratensensor 18. Diese Sensortypen sind am Markt erhältlich und z.B. in gängigen ESP- und ASR-Systemen verbaut. Ebenso angedeutet ist ein Lenkwinkelsensor 20. Hierbei kann es sich um den Sensor in einem Lenkgetriebe handeln, der z.B. die aktuelle Auslenkung einer Zahnstange des Lenkgetriebes ermittelt. Sämtliche der genannten Sensoren 16, 18, 20 liefern ihre Ermittlungsergebnisse über einen nicht gesondert dargestellten Kommunikationsbus (z.B. einen CAN-Bus) an das Steuergerät 12 und/oder die jeweils ermittelten Signale sind über diesen Kommunikationsbus durch das Steuergerät 12 abrufbar.

In Fig. 2 ist ein Funktionsschema samt durchgeführter Schritte eines erfindungsgemäßen Verfahrens gezeigt, das mit dem Steuergerät 12 aus Fig. 1 ausführbar ist. Die Darstellungsart entspricht dabei einer Definition von Funktionsblöcken, die gemäß bekannter Regelungs- bzw. Programmiersoftwarelösungen vorzugsweise automatisch in einen Programmcode umsetzbar sind. Dieser ist von dem Steuergerät 12 ausführbar und stellt beispielsweise die Ermittlungseinrichtung 14 bereit. Innerhalb Fig. 2 sind die einzelnen Schritte angegeben, die bei Durchlaufen des Funktionsdiagramms verfahrensgemäß abgearbeitet werden. Die gezeigte Schrittfolge und die nachstehend allgemein geschilderten Reihenfolgen sind aber nicht als zwingende zeitliche Reihenfolgen, sondern lediglich als beispielhaft zu verstehen. Insbesondere ist nicht ausgeschlossen, dass zumindest einige der Maßnahmen und Schritte auch in umgekehrter Reihenfolge ausgeführt werden und/oder zumindest teilweise auch parallel zueinander.

In einem Schritt S1 werden ein Querbeschleunigungswert Q, ein Gierratenwert G, ein Reibwert R und ein Lenkwinkelwert L von der Ermittlungseinrichtung 14 ermittelt. Der Reibwert R wird dabei gemäß dem im allgemeinen Beschreibungsteil geschilderten Ansätzen von der Ermittlungseinheit 14 berechnet bzw. geschätzt.

In einem Schritt S2 werden mittels Differenzialgliedern 22, die ein Beispiel für Normierungsglieder wie auch Umrechnungsglieder sind, normierte Werte gebildet und genauer gesagt ein normierter Gierratenwert G/R und ein normierter Querbeschleunigungswert Q/R. In einem Schritt S3 werden der Lenkwinkelwert sowie die reibwertnormierten Werte G/R und Q/R jeweils einem Totzonenglied 24 zugeführt.

Diese sind in bekannter Weise derart definiert, dass sie jeweils eine schematisch angedeutete Totzone bzw. einen Totzonenbereich 26 umfassen, in dem die jeweiligen Eingangswerte einem Ausgangswert von null gleichgesetzt werden. Es wäre auch ein anderer festgelegter Wert möglich, der dann im weiteren Verlauf zu einer ausbleibenden Berücksichtigung während der Kurvenrichtungsermittlung führt.

Die Totzone 26 ist in dem gezeigten Beispiel feststehend definiert und liegt um den Bereich von null. Dem liegt der Gedanke zugrunde, dass in dem gezeigten Beispiel der Lenkwinkelwert L, der Gierratenwert G und der Querbeschleunigungswert Q jeweils derart definiert sind, dass sie bei einer Geradeausfahrt den Wert null annehmen und bei einer ersten Kurvenrichtung (hier links) positive Werte annehmen und bei einer zweiten Kurvenrichtung (hier rechts) negative Werte annehmen. Um den Bereich von null existiert somit eine gewisse Detektionsunsicherheit, da nicht jeder geringfügige Ausschlag bzw. Vorzeichenwechsel unmittelbar eine tatsächliche Änderung der Kurvenrichtung bzw. der jeweils gemessenen Größe anzeigt, sondern auch aufgrund von Signalrauschen zustande kommen kann. Das Vorsehen entsprechender Totzonen um den Übergangsbereich zwischen Links- und Rechtskurve soll daher die Robustheit der Kurvenrichtungsermittlung verbessern.

Wie vorstehend im allgemeinen Teil geschildert, wird aber durch die Reibwertnormierung des Gierratenwerts G und des Querbeschleunigungswerts Q sichergestellt, dass bei geringen Reibungswerten, bei denen aufgrund einer eher vorsichtigen Fahrweise erwartungsgemäß nur geringe entsprechende Werte (d.h. geringe Nutzsignale) zur Verfügung stehen, diese aufgrund des Totzonenbereichs nicht unnötig stark herausgefiltert werden oder zumindest nicht derart stark, dass keine sinnvolle Kurvenrichtungsermittlung mehr möglich ist. Bei Glätte werden diese Werte G, Q per Reibwertnormierung höher gewichtet.

Es könnte aber ebenso vorgesehen sein, die Totzonenbereiche 26 an sich in Abhängigkeit des Reibwerts zu definieren und diese insbesondere (zumindest für die Gierrate und/oder die Querbeschleunigung) bei abnehmenden Reibwerten zu verkleinern, insbesondere proportional zu verkleinern. Für den Lenkwinkelwert L kann dies hingegen ausbleiben, da dieser trotz gegebenenfalls vorsichtiger Fahrweise nach wie vor ausreichend auswertbare Nutzsignale auch bei geringen Reibwerten (d.h. bei hoher Glätte) aufweisen kann.

Zusammengefasst existiert also je nach Definition des Totzonenbereichs 26 und/oder der durchgeführten Reibwertnormierung ein Wertebereich von zumindest dem Gierratenwert G und dem Querbeschleunigungswert Q, der je nach Definition des Totzonenbereichs 26 und/oder der Reibwertnormierung in dem entsprechenden Totzonenbereich 26 liegt bzw. zu diesem korrespondiert. Werte aus diesem Wertebereich werden daher allgemein zu null gesetzt oder anderweitig von einer weiteren Berücksichtigung während der Kurvenrichtungsermittlung ausgeschlossen.

In einem Schritt S4 werden die Ausgangswerte der Totzonenglieder 24 nach Durchlaufen eines optionalen Multiplexers 28 jeweils einem Skalierungsglied 30 zugeführt. Dort werden die entsprechenden Lenkwinkelwerte L, Gierratenwerte G und Querbeschleunigungswerte Q, die verschieden von null sind (d.h. die außerhalb der jeweiligen Totzonenbereiche 26 liegen), zu +1 oder zu -1 gesetzt, d.h. auf die entsprechende binäre Werteskala -1; +1 skaliert. Der Wert +1 zeigt dabei an, dass der entsprechende Lenkwinkelwert L wie auch ein entsprechender Gierratenwert G oder Querbeschleunigungswert Q eine Linkskurve anzeigt. Der Wert -1 zeigt hingegen an, dass ein jeweiliger Wert L, G, Q eine Rechtskurve anzeigt.

Die Zuordnung von den entsprechenden Werten L, G, Q zu einer angezeigten Links- oder Rechtskurve (bzw. den Werten +1/-1) kann über hinterlegte tabellarische Informationen bzw. Wertebereiche erfolgen. Beispielsweise kann das Skalierglied 30 für einen eingehenden Lenkradwinkelwert L, der verschieden von null ist, basierend auf diesen Informationen ermitteln, ob dieser Wert in einem Linkskurvenwertebereich oder Rechtskurvenwertebereich liegt und entsprechend diesen Wert dann zu -1 oder +1 setzen.

Die jeweiligen Ausgangswerte werden in Schritt S5 einer Analyseeinheit 40 zugeführt. Dieser liegt nun jeweils einen Wert von -1 oder +1 für den Lenkwinkelwert L, den Gierratenwert G und den Querbeschleunigungswert Q vor. Die Analyseeinheit 40 führt dann eine Konsistenzprüfung durch. Sind alle Werte +1 oder aber zumindest der Querbeschleunigungswert Q und einer von Lenkwinkelwert L und Gierratenwert G, stellt die Analyseeinheit 40 fest, dass eine Linkskurve vorliegt. Sind hingegen alle Werte -1 oder aber zumindest der Querbeschleunigungswert Q und einer von dem Lenkwinkelwert L und Gierratenwert G, stellt die Analyseeinheit 40 fest, dass eine Rechtskurve vorliegt. Dieses Ermittlungsergebnis K wird in Schritt S6 ausgegeben und z.B. mittels des erwähnten Kommunikationsbusses einem ESP-System zur Verfügung gestellt.

Bevorzugt wird dieses Ermittlungsergebnis K in einem optionalen weiteren Schritt S7 auch abgespeichert. Stellt die Analyseeinheit 40 fest, dass keiner der vorstehend geschilderten Fälle vorliegt (d.h. dass keine der Übereinstimmungen von Werten mit +1 bzw. -1 gemäß der vorstehend geschilderten Fälle vorhanden ist), kann die Kurvenermittlung als fehlgeschlagen bewertet werden. Stattdessen kann ein vormals abgespeicherter und insbesondere jüngster Ergebniswert K noch einmal ausgegeben bzw. verwendet werden. Dies ist durch den strichlierten Pfeil am rechten Ende von Fig. 2 angedeutet.

### Bezugszeichenliste

- 10: Fahrzeug
- 12: Steuergerät
- 14: Ermittlungseinrichtung
- 16: Querbeschleunigungssensor
- 18: Gierratensensor
- 20: Lenkwinkelsensor
- 22: Divisionsglied
- 24: Totzonenglied
- 26: Totzonenbereich
- 28: Multiplexer
- 30: Skalierglied
- 40: Analyseeinheit
- K: Ermittlungsergebnis
- L: Lenkradwinkelwert
- G: Gierratenwert
- R: Reibwert
- Q: Querbeschleunigungswert

## Patentansprüche

1. Verfahren zur Kurvenrichtungsermittlung für ein Fahrzeug (10), mit:
- Ermitteln eines Querbeschleunigungswerts (Q) des Fahrzeugs (10);
- Ermitteln von wenigstens einem von einem Gierratenwert (G) des Fahrzeugs (10) und einem Lenkwinkelwert (L) des Fahrzeugs (10);
- Ermitteln eines Reibwerts (R);
- Ermitteln der Kurvenrichtung basierend auf den ermittelten Werten,
wobei zum Ermitteln der Kurvenrichtung der Gierratenwert (G) und Querbeschleunigungswert (Q) bei einem abnehmenden Reibwert (R) stärker gewichtet werden.

2. Verfahren nach Anspruch 1, wobei für wenigstens einen der ermittelten Werte mit Ausnahme des Reibwerts (R) wenigstens ein Wertebereich existiert, in dem der ermittelte Wert nicht zur ermittelten Kurvenrichtung beiträgt.

3. Verfahren nach Anspruch 2, wobei die Größe des Wertebereichs abhängig vom Reibwert (R) ist.

4. Verfahren nach Anspruch 3, wobei die Abhängigkeit durch Normieren des ermittelten Werts mittels des Reibwerts (R) bereitgestellt wird.

5. Verfahren nach einem der Ansprüche 3 oder 4, wobei die Abhängigkeit durch Definieren eines Totzonenbereichs (26) für den ermittelten Wert in Abhängigkeit des Reibwerts (R) bereitgestellt wird.

6. Verfahren nach einem der Ansprüche 3 bis 5, wobei sich der Wertebereich mit abnehmenden Reibwert (R) verkleinert.

7. Verfahren nach einem der vorangehenden Ansprüche, wobei für wenigstens zwei der ermittelten Werte mit Ausnahme des Reibwerts (R) bei einer ersten Kurvenrichtung positive Werte und bei einer zweiten Kurvenrichtung negative Werte erhaltbar sind und wobei die Kurvenrichtung aus einem Vergleich der Vorzeichen der wenigstens zwei ermittelten Werte ermittelt wird.

8. Verfahren nach Anspruch 7, wobei bei mangelnder Konsistenz der Vorzeichen keine Kurvenrichtung ermittelt oder ein vormals abgespeichertes Kurvenrichtungs-Ermittlungsergebnis verwendet wird.

9. Vorrichtung, insbesondere Steuergerät (12) für ein Fahrzeug (10), mit einer Ermittlungseinrichtung (14), die dazu eingerichtet ist, folgendes auszuführen:
- Ermitteln eines Querbeschleunigungswerts (Q) des Fahrzeugs (10);
- Ermitteln von wenigstens einem von einem Gierratenwert (G) des Fahrzeugs (10) und einem Lenkwinkelwert (L) des Fahrzeugs (10);
- Ermitteln eines Reibwerts (R);
- Ermitteln der Kurvenrichtung basierend auf den ermittelten Werten,
wobei die Ermittlungseinrichtung (14) ferner dazu eingerichtet ist, zum Ermitteln der Kurvenrichtung den Gierratenwert (G) und Querbeschleunigungswert (Q) bei einem abnehmenden Reibwert (R) stärker zu gewichten.

## Claims

1. Method for determining the curve direction for a vehicle (10), the method comprising:
- determining a lateral acceleration value (Q) of the vehicle (10);
- determining at least one of a yaw rate value (G) of the vehicle (10) and a steering angle value (L) of the vehicle (10);
- determining a coefficient of friction (R);
- determining the curve direction based on the determined values,
wherein, for determining the curve direction, the yaw rate value (G) and lateral acceleration value (Q) are weighted more strongly in the event of a decreasing coefficient of friction (R).

2. Method according to claim 1, wherein at least one value range exists for at least one of the determined values with the exception of the coefficient of friction (R), in which value range the determined value does not contribute to the determined curve direction.

3. Method according to claim 2, wherein the magnitude of the value range is dependent on the coefficient of friction (R).

4. Method according to claim 3, wherein the dependence is provided by standardizing the determined value by means of the coefficient of friction (R).

5. Method according to either claim 3 or claim 4, wherein the dependence is provided by defining a dead zone region (26) for the determined value depending on the coefficient of friction (R).

6. Method according to any of claims 3 to 5, wherein the value range becomes smaller as the coefficient of friction (R) decreases.

7. Method according to any of the preceding claims, wherein positive values can be obtained for at least two of the determined values with the exception of the coefficient of friction (R) in a first curve direction and negative values can be obtained in a second curve direction, and wherein the curve direction is determined from a comparison of the signs of the at least two determined values.

8. Method according to claim 7, wherein, in the event of a lack of consistency of the signs, no curve direction is determined or a previously stored curve direction determination result is used.

9. Apparatus, in particular a control device (12) for a vehicle (10), comprising a determination device (14) which is configured to carry out the following:
- determining a lateral acceleration value (Q) of the vehicle (10);
- determining at least one of a yaw rate value (G) of the vehicle (10) and a steering angle value (L) of the vehicle (10);
- determining a coefficient of friction (R);
- determining the curve direction based on the determined values,
wherein the determination device (14) is also configured, for determining the curve direction, to weight the yaw rate value (G) and lateral acceleration value (Q) more strongly in the event of a decreasing coefficient of friction (R).

## Revendications

1. Procédé de détermination de la direction du virage pour un véhicule (10), comprenant :
- la détermination d'une valeur d'accélération transversale (Q) du véhicule (10) ;
- la détermination d'au moins une parmi une valeur de taux de lacet (G) du véhicule (10)
et une valeur d'angle de braquage (L) du véhicule (10) ;
- la détermination d'une valeur de frottement (R) ;
- la détermination de la direction du virage sur la base des valeurs déterminées,
dans lequel pour la détermination de la direction du virage, la valeur de taux de lacet (G) et la valeur d'accélération transversale (Q) sont plus fortement pondérées lors d'une valeur de frottement (R) décroissante.

2. Procédé selon la revendication 1, dans lequel pour au moins une des valeurs déterminées à l'exception de la valeur de frottement (R), au moins une plage de valeurs existe, dans laquelle la valeur déterminée ne contribue pas à la direction du virage déterminée.

3. Procédé selon la revendication 2, dans lequel la grandeur de la plage de valeurs dépend de la valeur de frottement (R).

4. Procédé selon la revendication 3, dans lequel la dépendance est fournie par normalisation de la valeur déterminée au moyen de la valeur de frottement (R).

5. Procédé selon l'une quelconque des revendications 3 ou 4, dans lequel la dépendance est fournie par définition d'une plage de zone morte (26) pour la valeur déterminée en fonction de la valeur de frottement (R).

6. Procédé selon l'une quelconque des revendications 3 à 5, dans lequel la plage de valeurs diminue lorsque la valeur de frottement (R) décroît.

7. Procédé selon l'une quelconque des revendications précédentes, dans lequel pour au moins deux des valeurs déterminées à l'exception de la valeur de frottement (R), des valeurs positives peuvent être obtenues avec une première direction du virage et des valeurs négatives avec une seconde direction de virage et dans lequel la direction du virage est déterminée à partir d'une comparaison des signes des au moins deux valeurs déterminées.

8. Procédé selon la revendication 7, dans lequel en cas d'absence de cohérence des signes, aucune direction du virage n'est déterminée ou un résultat de détermination de direction du virage stocké au préalable est utilisé.

9. Dispositif, en particulier appareil de commande (12) pour un véhicule (10), avec un dispositif de détermination (14) qui est conçu pour effectuer les actions suivantes :
- la détermination d'une valeur d'accélération transversale (Q) du véhicule (10) ;
- la détermination d'au moins une parmi une valeur de taux de lacet (G) du véhicule (10) et une valeur d'angle de braquage (L) du véhicule (10) ;
- la détermination d'une valeur de frottement (R) ;
- la détermination de la direction du virage sur la base des valeurs déterminées,
dans lequel le dispositif de détermination (14) est en outre conçu, pour déterminer la direction du virage, pour pondérer plus fortement la valeur de taux de lacet (G) et la valeur d'accélération transversale (Q) lors d'une valeur de frottement (R) décroissante.
